# EUROPÄISCHE PATENTANMELDUNG

(11) **EP 0 619 362 A2**
(43) Veröffentlichungstag der Anmeldung: **12.10.1994**
(21) Anmeldenummer: 94890051.9
(22) Anmeldetag: 04.03.1994
(51) Int. Cl.: C11B 7/00, C10L 1/02

(54) **Verfahren zur Fraktionierung von Fettsäureestergemischen**

(30) Priorität: 06.04.1993 AT 694/93
(71) Anmelder: WIMMER, Theodor, A-8081 Heiligenkreuz (AT)
(72) Erfinder: WIMMER, Theodor, A-8081 Heiligenkreuz (AT)
(74) Vertreter: Atzwanger, Richard, Dipl.-Ing. Patentanwalt

(57) **Zusammenfassung**

Es wird ein Verfahren und eine Vorrichtung zur Trennung von Gemischen von Fettsäureestern niedriger, einwertiger Alkohole, insbesondere des Methanols oder Ethanols, beispielsweise Rapsmethylester, in zwei Fraktionen beschrieben, wobei eine Fraktion mit einem höheren und eine Fraktion mit einem niedrigeren Stockpunkt als dem des eingesetzten Fettsäureestergemisches erhalten wird. Die Fraktionierung erfolgt durch extraktive Kristallisation mittels einer wässerigen Harnstofflösung. Die erhaltene Fraktion F1 kann als Dieselersatzkraftstoff zum Betrieb von Dieselmotoren bei Temperaturen oberhalb von 0°C und die Fraktion F2 bis zu Temperaturen von -25°C verwendet werden.

## Beschreibung

Die vorliegende Erfindung betrifft ein Verfahren zur Trennung von Gemischen von Fettsäureestern niedriger, einwertiger Alkohole, insbesondere des Methanols und Ethanols, in 2 Fraktionen, wobei eine Fraktion mit einem höheren Stockpunkt und eine Fraktion mit einem niedrigeren Stockpunkt als dem des Ausgangsgemisches erhalten wird, bei welchem Verfahren das Fettsäureestergemisch einer extraktiven Kristallisation mittels Harnstoff unterzogen wird.

Gemische von Fettsäureestern niedriger, einwertiger Alkohole, insbesondere des Methanols und Ethanols, werden in großtechnischem Maßstab durch katalytische Umesterung von natürlich vorkommenden pflanzlichen oder tierischen Ölen und Fetten oder durch Direktveresterung von aus diesen Ölen und Fetten gewonnenen Gemischen freier Fettsäuren mit diesen Alkoholen erzeugt. Typische Beispiele für solche Estergemische sind Palmfettsäuremethylester, Rapsölmethylester oder Sonnenblumenölmethylester.

Diese Fettsäureestergemische werden entweder als Ausgangsstoffe für oleochemische Folgeprodukte, wie z.B. für Tenside, oder in neuerer Zeit vermehrt als Dieselersatzkraftstoffe oder Schmiermittel verwendet.

Je nach Fettsäurezusammensetzung des Ausgangsmaterials besitzen solche Fettsäureestergemische verschieden hohe und für das jeweilige Fettsäureestergemisch charakteristische Stockpunkte. So besitzt beispielsweise Rapsölmethylester aus erucafreien Rapssorten einen Stockpunkt von ca. -12°C und Sonnenblumenölmethylester einen Stockpunkt von ca. 0°C.

Ein schwerwiegender Nachteil von aus pflanzlichen oder tierischen Ölen oder Fetten hergestellten Fettsäuremethyl- oder -ethylestergemischen in bezug auf ihren Einsatz als Dieselersatzkraftstoffe ist ihre beschränkte Verwendbarkeit bei tiefen Temperaturen aufgrund ihrer im Vergleich zu fossilen Dieselkraftstoffen relativ hohen Stockpunkte.

Es ist bekannt, daß man die Stockpunkte von Erdöldestillaten durch Zusätze, beispielsweise Ethylen-Vinyl-Copolymerisate, herabsetzen kann. (DE 1 914 756 oder DE 2 515 805).

Die Anwendung dieser Methode auf Pflanzenölester ist zwar prinzipiell möglich, jedoch müssen infolge der geringen Wirksamkeit dieser Zusätze in Pflanzenölestern die Zusatzmengen erhöht werden, wodurch andererseits wiederum die Motortauglichkeit verschlechtert und insbesondere die Verkokungsneigung erhöht wird. Weiters ist bekannt, daß man den Stockpunkt von Pflanzenölen bzw. Estern erniedrigen bzw. das Fließverhalten verbessern kann, indem man Methanol, Ethanol, Propylalkohole und andere niedrig siedende Alkohole oder Kohlenwasserstoffe, wie Benzin, Hexan etc., zusetzt. Die an Pflanzenölester gestellten Anforderungen betreffend ihre Verwendung als Dieselkraftstoffe seitens internationaler Normungsausschüsse verbieten jedoch solche Zusätze.

Aus der Österreichischen Patentschrift Nr. 387 399 ist weiters bekannt, daß man den Stockpunkt von Fettsäureestergemischen dadurch erniedrigen kann, daß man die höherschmelzenden Anteile durch Abkühlen auf minus 20°C und anschließendes Zentrifugieren abtrennt. Dieses Verfahren erfordert einerseits einen hohen Energieeinsatz für die Kühlung und andererseits ist die Ausbeute an der niedrig schmelzenden Fraktion infolge der Beschaffenheit der abzutrennenden höherschmelzenden Fraktion sehr niedrig und technisch sehr schwierig zu bewältigen.

Aus GB-PS 1 240 513 und US-PS 5 106 542 ist weiters bekannt, daß man Fettsäureestergemische durch Adduktbildung mittels Harnstoff in Fraktionen mit höheren und niedrigeren Gehalten an hochungesättigten Fettsäuren trennen kann. Diese Verfahren sind insbesondere wegen der Notwendigkeit des Einsatzes und der anschließenden Entfernung von organischen Lösungsmitteln, der komplizierten apparatetechnischen Verfahrensführung und der anfallenden Nebenprodukte für die Lösung der vorliegenden Aufgabe nicht geeignet.

Es besteht daher ein Bedürfnis nach einem Verfahren, um aus Fettsäureestergemischen niedriger, einwertiger Alkohole, insbesondere des Methanols oder Ethanols, Fraktionen zu erhalten, die auch bei tiefen Temperaturen als Dieselkraftstoffe verwendbar sind, sowie nach einem Verfahren, das zugleich einfach und wirtschaftlich ist.

Diese Aufgabe wurde erfindungsgemäß dadurch gelöst, daß man
a) das Fettsäureestergemisch bei Umgebungstemperatur mit einer wässerigen Harnstofflösung durch intensives Vermischen zur Reaktion bringt,
b) das entstandene feste Harnstoffaddukt mechanisch abtrennt,
c) das verbliebene, aus b) erhaltene Gemisch aus zwei flüssigen Phasen in eine ölige Phase (Fraktion F1), bestehend aus Fettsäureestern mit einem niedrigeren Stockpunkt als dem des Ausgangsmaterials, und eine wässerige Harnstofflösung trennt,
d) das feste Harnstoffaddukt durch Erhitzen in zwei flüssige Phasen spaltet und die leichtere ölige Phase (Fraktion F2), bestehend aus Fettsäureestern mit einem höheren Stockpunkt als dem des Ausgangsmaterials, von einer wässerigen Harnstofflösung trennt und
e) die aus c) und d) erhaltenen Harnstofflösungen vereinigt und für eine neue Fraktionierung verwendet.

Die verwendete Konzentration des Harnstoffs ist abhängig von der Umgebungstemperatur, bei der die Vermischung erfolgt, und beträgt vorzugsweise 30 Gew.-% bis 60 Gew.-% bei Temperaturen zwischen +15°C und +30°C.

Das während des Vermischens entstehende feste Harnstoffaddukt wird in bekannter Weise durch Filtration, z.B. mittels einer Schälzentrifuge oder einer Filterpresse, abgetrennt und auf 40°C bis 100°C erhitzt, wobei es schmilzt und sich in zwei flüssige Phasen trennt.

Die Trennung der nach der Filtration vom festen Harnstoffaddukt und der nach der Spaltung des Harnstoffadduktes vorliegenden Flüssigphasen erfolgt ebenfalls in bekannter Weise durch Sedimentation, Zentrifugation oder Dekantation, vorzugsweise aber durch einfaches Sedimentieren in einem Absetzbehälter. Die beiden wässerigen Harnstofflösungen werden vereinigt und für den nächsten Fraktionierungsansatz verwendet.

Als Ausgangsmaterial können beliebige, nach bekannten Verfahren durch Umesterung oder Direktveresterung aus natürlichen pflanzlichen oder tierischen Ölen oder Fetten gewonnene Fettsäureestergemische eingesetzt werden, wie beispielsweise Rapsmethyl- oder -ethylester, Sonnenblumentmethyl- oder -ethylester, Sojamethyl- oder -ethylester, Talgfettsäuremethyl- oder -ethylester oder Methylester oder Ethylester aus gebrauchten Speiseölen. Es können aber auch nach dem erfindungsgemäßen Verfahren erhaltene Fettsäureesterfraktionen erneut als Ausgangsmaterial eingesetzt und einer nochmaligen Fraktionierung nach dem erfindungsgemäßen Verfahren unterworfen werden.

Das Gewichtsverhältnis der Fettsäureestergemische zur Harnstofflösung kann zwischen 1 zu 0,5 und 1 zu 20 liegen und ist einerseits abhängig von der Fettsäurezusammensetzung des Gemisches und andererseits von den gewünschten Stockpunkten der erhaltenen Fraktionen. Bei Rapsölmethylester oder Sonnenblumenethylester wird vorzugsweise mit einem Gewichtsverhältnis von 1 Teil Estergemisch zu 2 bis 10 Teilen Harnstofflösung gearbeitet.

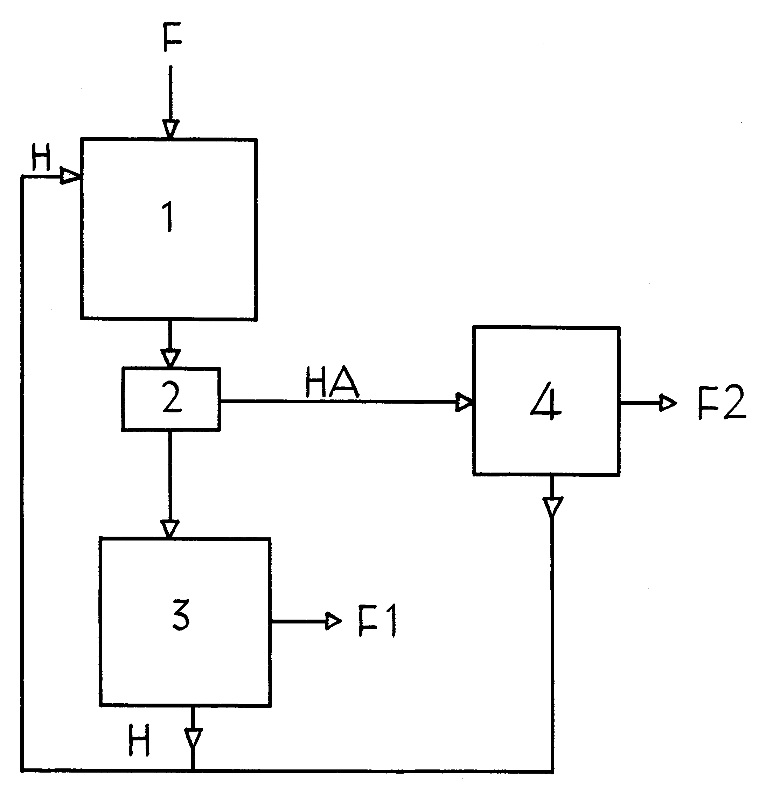

Eine Vorrichtung zur technischen Realisierung der Fraktionierung nach dem erfindungsgemäßen Verahren besteht im wesentlichen aus folgenden in der Zeichnung dargestellten Teilen: einem Mischer (1) für das als Ausgangsmaterial eingesetzte Fettsäureestergemisch (F) und die wässerige Harnstofflösung (H), einer Zentrifuge oder einem Filtrationsgerät (2) für die Trennung des festen Harnstoffadduktes (HA) von den beiden flüssigen Phasen, einem Absetzbehälter (3), der eine Ablaßvorrichtung am Boden zur Trennung der Fraktion 1 (F1) von der wässerigen Harnstofflösung (H) besitzt, einem heizbaren Behälter (4) zur Aufnahme des festen Harnstoffadduktes, der gleichzeitig als Absetzbehälter dient und zum Zwecke der Trennung der Fraktion 2 (F2) von der wässerigen Harnstofflösung (H) eine Ablaßvorrichtung am Boden besitzt. Die wässerige Harnstofflösung aus (4) wird mit der wässerigen Harnstofflösung aus (3) vereinigt und in den Mischer (1) zurückgeführt.

Das erfindungemäße Verfahren weist folgende wesentliche Vorteile auf:
infolge der Abwesenheit von organischen Lösungsmitteln fallen die Fettsäureesterfraktionen mit dem gleichen Reinheitsgrad an, mit dem sie eingesetzt wurden und brauchen nicht von Lösungsmitteln befreit werden.

Außer Harnstoff und Wasser werden keine weiteren Stoffe gebraucht und die Harnstofflösung liegt nach der Trennung von Fraktion 1 und Fraktion 2 und Vereinigung der in den Stufen c) und d) erhaltenen Lösungen in der gleichen Konzentration wie zu Beginn der Fraktionierung vor und kann ständig in den Prozess zurückgeführt werden. Es entstehen keinerlei Neben- oder Abfallprodukte.

Je nach Ausgangsmaterial und Wahl der Reaktionsbedingungen können Fettsäureesterfratkionen mit Stockpunkten bis -30°C erhalten werden oder können beliebige Stockpunkte eingestellt werden. Die Fraktionen mit höherem Stockpunkt als das Ausgangsmaterial können als "Sommerdiesel" für den Betrieb von Kraftfahrzeugmotoren oder für den Betrieb von stationären Dieselmotoren verwendet werden.

Die Erfindung wird durch die folgenden Beispiele näher erläutert:

### Beispiel 1:

200 Gramm Rapsmethylester mit einem Stockpunkt von -12°C werden zu 1000 Gramm einer 45-prozentigen wässerigen Harnstofflösung zugegeben und bei einer Temperatur von 25°C fünf Minuten lang intensiv gerührt, wobei sich ein kristallines Harnstoffaddukt ausscheidet. Diese Suspension wird über eine Filternutsche abfiltriert. Das Filtrat trennt sich innerhalb weniger Minuten in zwei flüssige Phasen, die mittels eines Scheidetrichters getrennt werden. (Die schwerere wässerige Phase kann nach Vereinigung mit der bei der Trennung von der Fraktion 2 erhaltenen wässerigen Harnstofflösung für einen neuen Ansatz wiederverwendet werden). Die Ausbeute an leichter Phase (Fraktion F1) beträgt 135 Gramm mit einem Stockpunkt von -25°C.

Das feste Harnstoffaddukt wird auf ca. 60°C erwärmt, wobei es schmilzt und sich innerhalb weniger Minuten in zwei flüssige Phasen teilt, die mittels eines Scheidetrichters getrennt werden. Die so erhaltene schwerere wässerige Phase besteht aus wässeriger Harnstofflösung und wird mit der oben erhaltenen wässerigen Harnstofflösung vereinigt. Die Ausbeute an leichterer Phase (Fraktion F2) beträgt 63 Gramm mit einem Stockpunkt von -2°C.

### Beispiel 2:

200 Gramm Rapsmethylester mit einem Stockpunkt von -12°C werden zu 600 Gramm einer 40-prozentigen wässerigen Harnstofflösung zugegeben, bei einer Temperatur von 19°C intensiv gerührt und anschließend wird nach der Beschreibung von Beispiel 1 weiterverfahren.
- Fraktion 1:: Ausbeute 152 Gramm, Stockpunkt -18°C
- Fraktion 2:: Ausbeute 46 Gramm, Stockpunkt -5°C

### Beispiel 3:

200 Gramm Sonnenblumenölmethylester mit einem Stockpunkt von 0°C werden zu 800 Gramm einer 45-prozentigen wässerigen Harnstofflösung zugegeben, bei einer Temperatur von 25°C fünf Minuten lang intensiv gerührt und nach der Beschreibung von Beispiel 1 weiterbehandelt.
- Fraktion 1:: Ausbeute 120 Gramm, Stockpunkt -10°C
- Fraktion 2:: Ausbeute 75 Gramm, Stockpunkt +5°C

## Patentansprüche

1. Verfahren zur Fraktionierung von Gemischen von Fettsäureestern niedriger, einwertiger Alkohole, insbesondere des Methanols oder Ethanols, durch extraktive Kristallisation mittels Harnstoff, wobei eine Fraktion mit einem niedrigeren und eine Fraktion mit einem höheren Stockpunkt als dem des Ausgangsmaterials erhalten wird, **dadurch gekennzeichnet**, daß man
a) das Fettsäureestergemisch bei Umgebungstemperatur mit einer wässerigen Harnstofflösung durch intensives Vermischen zur Reaktion bringt,
b) das entstandene feste Harnstoffaddukt mechanisch abtrennt,
c) das verbliebene, aus b) erhaltene Gemisch aus zwei flüssigen Phasen in eine ölige Phase (Fraktion F1), bestehend aus Fettsäureestern mit einem niedrigeren Stockpunkt als dem des Ausgangsmaterials, und eine wässerige Harnstofflösung trennt,
d) das feste Harnstoffaddukt durch Erhitzen in zwei flüssige Phasen spaltet und die leichtere ölige Phase (Fraktion F2), bestehend aus Fettsäureestern mit einem höheren Stockpunkt als dem des Ausgangsmaterials, von einer wässerigen Harnstofflösung trennt und
e) die aus c) und d) erhaltenen Harnstofflösungen vereinigt und für eine neue Fraktionierung verwendet.

2. Verfahren nach Anspruch 1, **dadurch gekennzeichnet**, daß die Konzentration des Harnstoffs in Wasser zwischen 30 Gew.-% und 60 Gew.-% beträgt.

3. Verfahren nach Anspruch 1 oder 2, **dadurch gekennzeichnet**, daß das Vermischen der Fettsäureester mit der wässerigen Harnstofflösung bei der jeweils herrschenden Raum- bzw. Umgebungstermperatur, vorzugsweise zwischen +15°C und +30°C, erfolgt.

4. Verfahren nach einem der Ansprüche 1 bis 3, **dadurch gekennzeichnet,** daß das feste Harnstoffaddukt durch Erhitzen auf 40°C bis 100°C in zwei flüssige Phasen gespalten wird.

5. Verfahren nach einem der Ansprüch 1 bis 4, **dadurch gekennzeichnet,** daß die Fettsäureester zur wässerigen Harnstofflösung in einem Gewichtsverhältnis von zwischen 1 zu 0,5 und 1 zu 20, vorzugsweise zwischen 1 zu 2 bis 1 zu 10, eingesetzt werden.

6. Vorrichtung zur Durchführung der Fraktionierung nach einem der Ansprüche 1 bis 5, **dadurch gekennzeichnet**, daß sie aus einem Mischer (1) für das eingesetzte Fettsäureestergemisch (F) und die Harnstofflösung (H), einer Zentrifuge oder einem Filtrationsgerät (2) zur Abtrennung des festen Harnstoffadduktes (HA) von den beiden Flüssigphasen, einem Absetzbehälter (3) mit Ablaßvorrichtung am Boden zur Trennung der Fettsäureesterfraktion mit dem niedrigeren Stockpunkt (F1) von der wässerigen Harnstofflösung und einem beheizbaren Behälter (4) mit einer Ablaßvorrichtung am Boden zur Spaltung und Trennung des festen Harnstoffadduktes in eine ölige Phase, bestehend aus der Fettsäureesterfraktion mit einem höheren Stockpunkt (F2), und eine wässerige Harnstofflösung besteht.

7. Verwendung der nach dem Verfahren gemäß einem der Ansprüche 1 bis 6 hergestellten Fraktion 1 als Dieselkraftstoff für den Betrieb von Dieselmotoren bei Temperaturen zwischen -15°C und -30°C.

8. Verwendung der nach dem Verfahren gemäß einem der Ansprüche 1 bis 6 hergestellten Fraktion 2 als Dieselkraftstoff für den Betrieb von Kraftfahrzeugen oder stationären Dieselmotoren bei Temperaturen oberhalb von 0°C.
